# DEMANDE DE BREVET EUROPEEN

(11) **EP 3 228 447 A1**
(43) Date de publication de la demande: **11.10.2017**
(21) Numéro de dépôt: 17161870.5
(22) Date de dépôt: 20.03.2017
(51) Int. Cl.: B32B 5/12, B32B 7/00, B32B 9/00, B32B 9/02, B32B 9/04, B32B 29/02, B32B 37/10, B32B 3/26

(54) **MATERIAU COMPOSITE**

(30) Priorité: 05.04.2016 FR 1600577
(71) Demandeur: VN COMPOSITES, 83120 Sollies Pont (FR)
(72) Inventeur: TRONQUOY, Nicolas, 83390 Puget Ville (FR); TRONQUOY, Jean-Paul, 83210 Sollies-Pont (FR)
(74) Mandataire: Macquet, Christophe

(57) **Abrégé**

L'invention concerne un matériau composite comprenant une première couche externe (CE1) réalisée dans un matériau thermiquement isolant ; une seconde couche externe (CE2) en liège ; et un ensemble de couches internes, ledit ensemble étant contenu entre lesdites couches externes, et comprenant une couche (Cl) formant une âme en liège, ladite couche étant comprise entre au moins deux couches composites (CI1, CI2) comportant des fibres naturelles et un liant, un procédé de fabrication d'un tel matériaux et son utilisation.

## Description

### DOMAINE DE L'INVENTION

La présente invention concerne un matériau composite destiné, d'une part, à amortir les ondes sonores et/ou mécaniques dues, notamment, aux vibrations occasionnées par un fluide sur une enveloppe creuse et, d'autre part, à constituer une barrière contre le feu. L'invention concerne également un procédé de fabrication d'un tel matériau composite ainsi que son utilisation.

### ART ANTERIEUR

Les matériaux composites destinés à amortir les ondes sonores et/ou mécaniques ont fait l'objet de nombreux programmes de recherche au cours de ces cinquante dernières années.

Des matériaux composites comprenant des fibres de carbone de renforcement ont été développés. Ils sont aujourd'hui utilisés dans pratiquement toutes les applications et, notamment, dans des applications spatiales, aéronautiques ou encore ferroviaires, qui exigent des matériaux de revêtement offrant une grande résistance mécanique pour un poids réduit. Cependant, les fibres de carbone présentent une certaine toxicité et leur recyclage n'est pas aisé.

Des matériaux comprenant des assemblages de fibres de carbone/élastomère sont également connus. Dans ces matériaux, les élastomères sont intégrés entre des plis des matériaux pour en améliorer le comportement et les propriétés. Par exemple, un élastomère viscoélastique, intégré dans la structure du matériau, permet d'amortir les vibrations et le bruit. Cependant, l'utilisation d'un élastomère ne permet pas de satisfaire aux exigences d'éco-compatibilité recherchées à ce jour par les industriels. Il s'agit en effet de matériaux fortement transformés et qui présentent une empreinte carbone élevée.

On connait par ailleurs des matériaux composites comprenant des assemblages métal/élastomère, dans lesquels le métal est par exemple de l'aluminium. L'aluminium est un métal léger et résistant mais qui présente le désavantage d'être toxique et dont le recyclage est particulièrement énergivore.

Des mousses de polyuréthane ou de polyéthylène sont aussi connues pour la fabrication de matériaux dans le domaine de l'invention. Les mousses de polyuréthane présentent en effet de fortes propriétés isolantes et des résistances mécaniques élevées. Cependant, la mise en ouvre de telles mousses entraîne des risques importants, car elles produisent des composés organiques volatils très toxiques et à effet de serre.

Ainsi, il existe un besoin grandissant pour le développement de matériaux destinés à amortir les ondes sonores et/ou mécaniques dues aux vibrations d'un fluide sur une enveloppe creuse et à constituer une barrière contre le feu, tout en réduisant l'empreinte carbone associée à la réalisation et à l'utilisation de ces matériaux.

### RESUME DE L'INVENTION

Compte tenu de l'état de la technique précité, un problème que se propose de résoudre l'invention est de réaliser un matériau composite léger et compact, qui présente de bonnes qualités d'amortissement des ondes sonores et/ou mécaniques, qui offre une excellente résistance au feu, et qui respecte les contraintes actuelles en termes d'éco-compatibilité.

La solution proposée de l'invention à ce problème posé a pour premier objet un matériau composite comprenant une première couche externe réalisée dans un matériau thermiquement isolant ; une seconde couche externe en liège ; et un ensemble de couches internes, ledit ensemble étant contenu entre lesdites couches externes, et comprenant une couche formant une âme en liège, ladite couche étant comprise entre au moins deux couches composites comportant des fibres naturelles et un liant.

Elle a pour second objet un procédé de fabrication du matériau composite tel que défini ci-dessus, comprenant les étapes successives suivantes selon lesquelles : on superpose la première couche externe, l'ensemble de couches internes et la seconde couche externe dans une enceinte de fabrication de matériau ; et on chauffe les couches superposées dans l'enceinte de fabrication et/ou on applique une pression et/ou un vide de sorte que le liant, qui imprègne les fibres naturelles des couches composites, lie lesdites fibres ainsi que les couches externes et l'âme en liège.

Elle a pour troisième objet une utilisation d'un matériaux composite tel que défini ci-dessus comme revêtement d'une paroi pour amortir des ondes sonores et/ou des vibrations mécaniques et pour constituer une barrière contre le feu.

De manière avantageuse, - la première couche externe est réalisée en liège et/ou dans une matière céramique ; - la couche formant l'âme en liège est perforée d'une pluralité de trous débouchant ; - la couche formant l'âme en liège est comprise entre quatre couches composites, deux desdites couches étant situées d'un côté de ladite âme en liège et deux autres couches, de l'autre côté ; - les fibres naturelles des couches composites sont choisies parmi le coton, le sisal, le chanvre, la jute et le lin ; - les fibres naturelles contenues dans deux couches composites superposées présentent une orientation différente ; - le liant est une matrice polymérique, qui lie, d'une part, les fibres naturelles de la couche composite qui le comporte et, d'autre part, les couches situées de part et d'autre de ladite couche composite ; - le liant est une matrice thermodurcissable ou thermoplastique ; et - la première couche externe, la seconde couche externe et la couche formant l'âme en liège ont une épaisseur comprise entre 1 et 8 mm.

### BREVE DESCRIPTION DES FIGURES

L'invention sera mieux comprise à la lecture de la description non limitative qui suit, rédigée au regard des dessins annexés, dans lesquels :
la figure 1 représente une vue éclatée du matériau composite selon l'invention ; et
la figure 2 est une vue de dessus d'un détail de la couche formant l'âme en liège C1 du matériau composite selon l'invention.

### DESCRIPTION DETAILLEE DE L'INVENTION

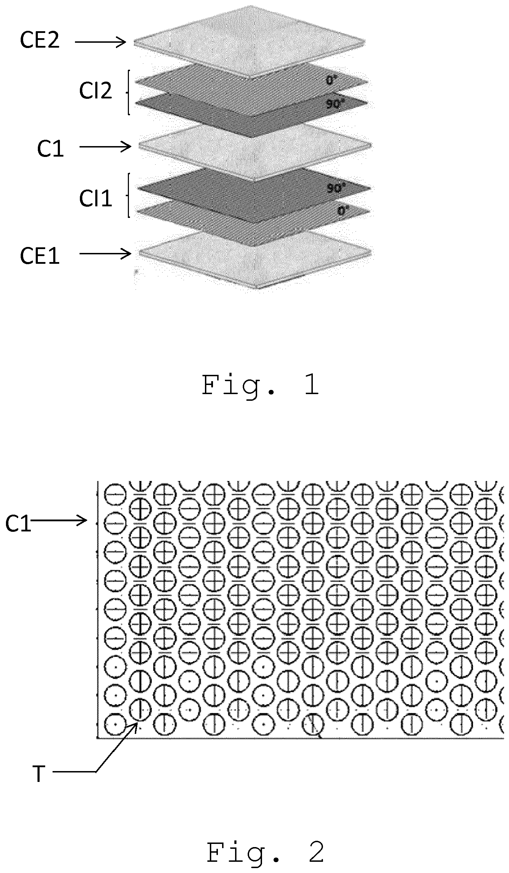

L'invention concerne un matériau composite. Ainsi que cela apparaît à la figure 1, ce matériau composite comprend une première couche externe CE1 réalisée dans un matériau thermiquement isolant, une seconde couche externe CE2 en liège, et un ensemble de couches internes. L'ensemble de couches internes est contenu entre les couches externes, et comprend une couche C1 formant une âme en liège. La couche formant l'âme en liège est comprise entre au moins deux couches composites ou peaux CI1, CI2 comportant des fibres naturelles et un liant.

La première couche externe CE1 du matériau composite selon l'invention est avantageusement formée d'un ou plusieurs matériaux ignifuges. Ces matériaux sont avantageusement choisis parmi le liège et/ou une céramique. De préférence, le matériau thermiquement isolant est une céramique. Il s'agit par exemple d'un papier isolant à base de fibres céramiques bio-solubles tel que le papier céramique isolant.

Dans un mode de réalisation préférentiel, la couche C1 formant l'âme en liège du matériau composite est perforée d'une pluralité de trous débouchant. Ces perforations ont pour effet de diminuer la masse globale du matériau composite et d'améliorer l'amortissement des ondes sonores et/ou mécaniques. A la figure 2, ces trous sont référencés T. Dans l'exemple de réalisation présenté dans cette figure, les trous sont régulièrement répartis dans l'âme en liège du matériau composite selon l'invention, le diamètre d'un trou T est de 6 mm, et la distance entre le bord vertical de C1 et le centre du premier trou T est de 5 mm, la distance entre le centre de deux trous T consécutifs est de 6,93 mm, la distance entre le bord horizontal de C1 et le centre du premier trou T est de 4 mm, et la distance entre les centres de deux trous T consécutifs est de 8 mm.

Dans un mode de réalisation préférentiel selon l'invention, la couche C1 formant l'âme en liège est comprise entre quatre couches composites CI1, CI2, deux desdites couches CI1 étant situées d'un côté de ladite âme en liège C1 et deux autres couches CI2 étant situées de l'autre côté.

De manière préférentielle, les fibres naturelles des couches composites du matériau selon l'invention sont choisies parmi le coton, le sisal, le chanvre, la jute et le lin. Plus préférentiellement, les fibres naturelles sont avantageusement des fibres de lin.

Les fibres naturelles contenues dans deux couches composites superposées présentent une orientation différente. Autrement dit, l'orientation du drapage est différent d'une couche à l'autre. Les fibres naturelles d'une première couche vont être avantageusement orientées de manière perpendiculaire par rapport aux fibres naturelles de la deuxième couche composite. Dans l'exemple de la figure 1, l'orientation des fibres des couches composites est du type 0/90°. Une telle différence dans l'orientation du drapage des couches permet au composite d'offrir une résistance supérieure.

Le liant imprègne les fibres contenues dans les peaux formant les couches référencées CI1 et CI2. Il est avantageusement formé d'une matrice polymérique qui lie, d'une part, les fibres naturelles de la couche composite qui le comporte et, d'autre part, les couches situées de part et d'autre de ladite couche composite.

Par « liant », on entend tous composés ou mélanges de de composés susceptibles de présenter un effet adhésif entre différents matériaux.

Les liants peuvent être des liants thermodurcissables ou thermoplastiques ou encore des résines à base végétale par exemple de type cellulose et dérivés d'amidon.

Dans un mode de réalisation préféré de l'invention, les liants sont thermodurcissables choisis parmi les aminoplastes, les phénoplastes, les polyépoxydes, les polyimides, les polyuréthanes, les polyesters insaturés et les vinylesters. Avantageusement, le liant selon l'invention est une matrice polyépoxyde.

Dans un mode de réalisation avantageux, la première couche externe, la seconde couche externe et la couche formant l'âme en liège ont une épaisseur comprise entre 1 et 8 mm, préférentiellement entre 1 et 6 mm, encore plus préférentiellement entre 1 et 4 mm. Les peaux ont une épaisseur comprise entre 0,5 et 1 mm. L'épaisseur totale du composite est comprise entre 3 et 7 mm. Dans un exemple, elle est de l'ordre de 5 mm.

A noter que les termes « comprise entre » signifient que les bornes de l'intervalle de valeurs sont incluses dans l'intervalle de valeurs.

L'invention concerne également un procédé de fabrication du matériau composite tel que décrit précédemment. D'un point de vue industriel, et dans un souci de réduire à la fois l'empreinte carbone que peut générer un tel procédé, et les coûts de fabrication d'un tel matériau composite, ledit procédé de fabrication du matériau composite est réalisé en une seule étape essentielle.

Dans un mode de réalisation préférée, le procédé de fabrication du matériau composite comprend les étapes successives suivantes selon lesquelles on superpose la première couche externe CE1, l'ensemble de couches internes et la seconde couche externe CE2 dans une enceinte de fabrication de matériau ; et on chauffe les couches superposées dans l'enceinte de fabrication et/ou on applique une pression et/ou un vide de sorte que le liant, qui imprègne les fibres naturelles des couches composites, lie lesdites fibres ainsi que les couches externes et l'âme en liège C1.

Les couches sont disposées dans l'enceinte dans l'ordre suivant : CE1/CI1/C1/CI2/CE2. Préférentiellement, un chauffage thermique est appliqué à une température comprise entre 100 et 150°C, préférentiellement entre 110°C et 140°C, encore plus préférentiellement entre 118° et 130°C. Une pression de 0,8 bar est appliquée dans le but de créer un effort de pression, et un vide est créé dans l'enceinte.

Le matériau composite selon l'invention se présente sous la forme de panneaux qui sont appliqués sur une paroi rigide notamment une paroi métallique, par exemple au moyen d'un adhésif tel qu'un adhésif double face ou d'une colle adaptée. Il s'agit en particulier de la face interne d'une paroi métallique externe d'un moyen de transport telle que la carlingue ou le fuselage d'un avion, les parois extérieures d'un train en particulier d'un train à grande vitesse, ou la carrosserie d'un véhicule automobile. Il amortit les ondes sonores et/ou les vibrations mécaniques et constitue une barrière contre le feu grâce à son fort potentiel ignifuge.

Dans le but d'évaluer l'amortissement du matériau composite selon l'invention, une série d'essais d'amortissement de type Oberst - 3dB a été menée. Ces essais sont connus pour l'étude et la mesure des propriétés mécaniques de matériaux amortissants solides. Pour ces essais, on a utilisé des échantillons d'un matériau composite selon l'invention et d'un matériau qualifié aéronautique selon l'art antérieur. Le matériau composite selon l'invention utilisé présente les caractéristique suivantes : le papier céramique collé à la couche CE1 a une épaisseur de 1 mm, la couche extérieure en liège CE1 a une épaisseur de 1,5 mm, les couches intermédiaires CI1 et CI2 sont constituées chacune de deux peaux en lin où chacune des peaux en lin a une épaisseur de 0,4 mm, l'âme en liège C1 a une épaisseur de 2 mm, et la couche extérieure en liège CE2 a une épaisseur de 2 mm, des trous étant régulièrement répartis dans l'âme en liège, le diamètre d'un trou T étant de 6 mm, la distance entre le bord vertical de C1 et le centre du premier trou T étant de 5 mm, la distance entre le centre de deux trous T consécutifs étant de 6,93 mm, la distance entre le bord horizontal de C1 et le centre du premier trou T étant de 4 mm, et la distance entre les centres de deux trous T consécutifs étant de 8 mm. Après collage de chacune des couches selon le procédé de fabrication décrit dans la présente invention, le matériau composite selon l'invention présente une épaisseur finale de 6,9 mm. La masse surfacique de ce matériau composite est de l'ordre de 2600 g/m² +/- 15%. Le matériau composite qualifié aéronautique selon l'art antérieur est de type carbone/élastomère dont l'épaisseur est comprise entre 2,5 mm et 3 mm.

Le module de stockage et le facteur de perte ont été déterminés pour chaque échantillon. Ils sont donnés dans le tableau 1 suivant :

**Tableau 1 : Module de stockage et facteur de perte identifiés à la température de 20°C**

| | **Poutre nue** | **Composite selon l'invention** | | | **Composite qualifié aéronautique** | |
|---|---|---|---|---|---|---|
| | **Référence** | **Echantillon 1** | **Echantillon 2** | **Echantillon 3** | **Echantillon 1** | **Echantillon 2** |
| **Module de stockage (Mpa)** | 2, 0.10⁵ | 610 | 720 | 670 | 6100 | 6000 |
| **Facteur de perte (%)** | 0,1 | 30,8 | 28,3 | 33 | 22,5 | 18,4 |

L'identification est réalisée par la méthode précitée à - 3 dB à partir des fonctions de réponse en fréquence. Le module de stockage correspond au module d'élasticité en flexion de la poutre recouverte du matériau composite et le facteur de perte correspond au taux d'amortissement du composite en pourcentage.

Les résultats du tableau 1 montrent que le composite selon l'invention est plus performant que le produit composite technique haut de gamme existant sur le marché et qualifié pour l'aéronautique.

## Revendications

1. Matériau composite comprenant
une première couche externe (CE1) réalisée dans un matériau thermiquement isolant ;
une seconde couche externe (CE2) en liège ; et
un ensemble de couches internes, ledit ensemble étant contenu entre lesdites couches externes, et comprenant une couche (C1) formant une âme en liège, ladite couche étant comprise entre au moins deux couches composites (CI1, CI2) comportant des fibres naturelles et un liant.

2. Matériau composite selon la revendication 1, **caractérisé en ce que** la première couche externe (CE1) est réalisée en liège et/ou dans une matière céramique.

3. Matériau composite selon l'une des revendications 1 ou 2, **caractérisé en ce que** la couche (C1) formant l'âme en liège est perforée d'une pluralité de trous débouchant (T).

4. Matériau composite selon l'une des revendications 1 à 3, **caractérisé en ce que** la couche formant l'âme en liège est comprise entre quatre couches composites (CI1, CI2), deux desdites couches (CI1) étant situées d'un côté de ladite âme en liège (C1) et deux autres couches (CI2), de l'autre côté.

5. Matériau composite selon l'une des revendications précédentes, **caractérisé en ce que** les fibres naturelles des couches composites (CI1, CI2) sont choisies parmi le coton, le sisal, le chanvre, la jute et le lin.

6. Matériau composite selon l'une des revendications 4 ou 5, **caractérisé en ce que** les fibres naturelles contenues dans deux couches composites superposées (CI1, CI2) présentent une orientation différente.

7. Matériau composite selon l'une des revendications précédentes, **caractérisé en ce que** le liant est une matrice polymérique, qui lie, d'une part, les fibres naturelles de la couche composite (CI1, CI2) qui le comporte et, d'autre part, les couches (C1, CE2, CE1) situées de part et d'autre de ladite couche composite.

8. Matériau composite selon la revendication 7, **caractérisé en ce que** le liant est une matrice thermodurcissable ou thermoplastique.

9. Matériau composite selon l'une des revendications précédentes, **caractérisé en ce que** la première couche externe (CE1), la seconde couche externe (CE2) et la couche (C1) formant l'âme en liège ont une épaisseur comprise entre 1 et 8 mm.

10. Procédé de fabrication d'un matériau composite selon l'une des revendications précédentes, **caractérisé en ce qu'**il comprend les étapes successives suivantes selon lesquelles :
on superpose la première couche externe (CE1), l'ensemble de couches internes et la seconde couche externe (CE2) dans une enceinte de fabrication de matériau ; et
on chauffe les couches superposées dans l'enceinte de fabrication et/ou on applique une pression et/ou un vide de sorte que le liant, qui imprègne les fibres naturelles des couches composites, lie lesdites fibres ainsi que les couches externes et l'âme en liège (C1).

11. Utilisation d'un matériau composite selon l'une des revendication 1 à 9, comme revêtement d'une paroi pour amortir des ondes sonores et/ou des vibrations mécaniques et pour constituer une barrière contre le feu.
